# EUROPEAN PATENT APPLICATION

(11) **EP 4 524 394 A1**
(43) Date of publication of application: **19.03.2025**
(21) Application number: 22960703.1
(22) Date of filing: 30.12.2022
(51) Int. Cl.: F03D 13/25, B63B 39/04

(54) **WIND TURBINE FOUNDATION, WIND GENERATING SET, AND CONTROL METHOD**

(30) Priority: 30.09.2022 CN 202211215335
(71) Applicant: GOLDWIND SCIENCE & TECHNOLOGY CO., LTD., Xinjiang 830026 (CN)
(72) Inventor: ZHAI, Endi, Beijing 100176 (CN); GAO, Yang, Beijing 100176 (CN); DU, Xin, Beijing 100176 (CN); XU, Zhiliang, Beijing 100176 (CN)
(74) Representative: Gulde & Partner
(86) International application number: PCT/CN2022/143773
(87) International publication number: WO 2024/066112

(57) **Abstract**

The present application provides a wind turbine foundation, a wind generating set, and a control method. The wind turbine foundation comprises a support assembly and a vibration suppression system; the support assembly comprises a main floating body, a plurality of sub floating bodies distributed at intervals, and connecting bodies; each sub floating body is connected to the main floating body by the corresponding connecting body, and the main floating body is connected to a tower; the vibration suppression system comprises vibration suppression devices, a first collector, and a controller; the vibration suppression devices are connected to at least two sub floating bodies among the plurality of sub floating bodies; the vibration suppression device comprises a base, a mounting frame, a rotating disc, and a driving component; and the controller controls, according to a floating body vibration acceleration, the driving component of each vibration suppression device to drive the rotating disc to rotate to a predetermined rotational speed. The wind turbine foundation has a vibration suppression function, high response speed and good vibration suppression effect.

## Description

### CROSS REFERENCE TO RELATED APPLICATION

The present application claims priority to Chinese Patent Application No. 202211215335.6 filed on September 30, 2022, which is incorporated by reference in its entirety.

### TECHNICAL FIELD

The present application relates to the technical field of wind power, in particular to a wind turbine foundation, a wind generating set, and a method for controlling a wind generating set.

### BACKGROUND

Floating wind generating sets are greatly different from onshore and offshore single-pile fixed foundations. From the perspective of external loads, the floating wind generating sets face wind loads, wave loads, ocean current loads, ice loads, etc. From the perspective of overall dynamics, the floating wind generating sets with "floating" characteristics have six degrees of freedom in all directions, including translational longitudinal sway, lateral sway and vertical sway, as well as rotational lateral shake, longitudinal shake, and head shake.

Under the intertwined coupling effects of external load randomness and the motion complexity of the sets, the branching characteristics of the floating wind generating sets become more complex. The stability of a wind turbine foundation used for carrying a wind turbine body directly affects the aerodynamic inflow angle of wind turbine body blades, which is directly related to the power generation capacity of a set. Therefore, how to ensure the stability of floating wind generating sets is one of the urgent problems to be solved in the field of wind power.

### SUMMARY

Embodiments of the present application provide a wind turbine foundation, a wind generating set, and a control method, where the wind turbine foundation has a vibration suppression function, high response speed and good vibration suppression effect.

In a aspect, embodiments of the present application provide a wind turbine foundation for supporting a tower. The wind turbine foundation includes: a support assembly including a main floating body, a plurality of sub floating bodies, and connecting bodies corresponding to each of the sub floating bodies, where the plurality of sub floating bodies are distributed around the main floating body at intervals, each of the sub floating bodies is connected to the main floating body via the corresponding connecting body, and the main floating body is configured for being connected to the tower; and a vibration suppression system including vibration suppression devices, a first collector, and a controller, where the vibration suppression devices are connected to at least two of the sub floating bodies; the vibration suppression device includes a base, a mounting frame, a rotating disc, and a driving component, where the driving component is connected to the mounting frame and can drive the rotating disc to rotate relative to the mounting frame about a first axis as a rotation center, the mounting frame is rotatably connected to the base and can rotate relative to the base about a second axis intersect with the first axis as a rotation center; the first collector is configured to obtain a floating body vibration acceleration of the support assembly; the controller is configured to control, based on the floating body vibration acceleration, the driving component of each of the vibration suppression devices on the support assembly to drive the rotating disc to rotate to a predetermined rotational speed.

In another aspect, embodiments of the present application provides a wind generating set, including:
the aforementioned wind turbine foundation; and
a wind turbine body including a tower and a nacelle arranged on the tower, where the tower is connected to the main floating body of the wind turbine foundation.

According to another aspect of the embodiments of the present application, the vibration suppression device is provided on at least one of the tower and the nacelle, the vibration suppression system further includes a second collector configured to obtain a nacelle vibration acceleration of the nacelle, and the controller is further configured to control, based on the nacelle vibration acceleration, the driving component of each of the vibration suppression devices on the wind turbine body to drive the rotating disc to rotate to the predetermined rotational speed.

According to another aspect of the embodiments of the present application, two or more vibration suppression devices are provided on the wind turbine body, and the two or more vibration suppression devices are all arranged in the nacelle; or at least one of the two or more vibration suppression devices is located in the nacelle and at least one of them is located at the top of the tower close to the nacelle; or the two or more vibration suppression devices are all located at the top of the tower close to the nacelle and spaced apart in a circumferential direction of the tower at the same height.

In another aspect, embodiments of the present application provids a control method for a wind turbine, including:
configuring the aforementioned wind generating set;
obtaining a floating body vibration acceleration of the support assembly and a nacelle vibration acceleration of the nacelle separately; and
configuring the speed of each vibration suppression device based on the floating body vibration acceleration and the nacelle vibration acceleration.

According to another aspect of the embodiments of the present application, before the step of configuring the speed of each vibration suppression device based on the floating body vibration acceleration and the nacelle vibration acceleration, the control method further includes:
determining, based on the floating body vibration acceleration and the nacelle vibration acceleration, a first-order spectral data of the nacelle in the first direction and a first-order spectral data thereof in the second direction, a first-order spectral data of the support assembly in the first direction and a first-order spectral data thereof in the second direction, respectively.

According to the wind turbine foundation, the wind generating set, and the control method provided in the embodiments of the present application, the wind turbine foundation includes a support assembly and a vibration suppression system, the support assembly includes a main floating body and a plurality of sub floating bodies, the main floating body can be configured for being connected to the tower, the plurality of sub floating bodies are distributed around the main floating body at intervals, and each sub floating body is connected to the main floating body by the corresponding connecting body, so that the plurality of sub floating bodies assist the main floating body in supporting the tower and other components, which can improve the support capacity and stability of the wind turbine foundation.

Moreover, the vibration suppression system includes vibration suppression devices, a first collector, and a controller. In the case that the wind turbine foundation and the structure supported thereby vibrate, the first collector can obtain a floating body vibration acceleration of the support assembly. The vibration suppression device includes a base, a mounting frame, a rotating disc, and a driving component, where the rotating disc can be driven by the driving component to rotate at a high speed relative to the mounting frame about the first axis as the rotation center, the mounting frame is rotatably connected to the base and can rotate relative to the base about the second axis intersecting with the first axis as the rotation center, and the controller can control, based on the floating body vibration acceleration obtained by the first collector, the driving component to drive the rotating disc to rotate to a predetermined rotational speed. When driven by the driving component to rotate at the high speed, the rotating disc with certain mass has a large moment of inertia towards a rotating shaft extending along the first axis, remains stable in an inertial space, and points to a fixed direction. In the presence of external disturbance with precession, a moment perpendicular to an external force will be produced, thereby maintaining the stability of the rotating shaft extending along the first axis in the inertial space, suppressing the vibration of the structure, and ensuring the safety performance of the wind turbine foundation and the applied wind generating set. The first collector and the controller can achieve automatic control on the wind turbine foundation, thereby improving the response speed of the wind turbine foundation in vibration suppression work.

### BRIEF DESCRIPTION OF THE DRAWINGS

The features, advantages, and technical effects of exemplary embodiments of the present application will be described below with reference to the accompanying drawings.
Fig. 1 is a schematic structural view of a wind generating set according to an embodiment of the present application;
Fig. 2 is a schematic structural view of a wind turbine foundation according to an embodiment of the present application;
Fig. 3 is a schematic structural view of a vibration suppression device according to an embodiment of the present application;
Fig. 4 is a side view of the vibration suppression device according to an embodiment of the present application;
Fig. 5 is a control logic view of the wind generating set according to an embodiment of the present application;
Fig. 6 is a schematic structural view of a wind turbine foundation according to another embodiment of the present application;
Fig. 7 is a control logic view of the wind generating set according to another embodiment of the present application;
Fig. 8 is a schematic structural view of a wind turbine body according to another embodiment of the present application;
Fig. 9 is a schematic structural view of a wind turbine body according to still another embodiment of the present application; and
Fig. 10 is a flowchart of a control method according to an embodiment of the present application.

100 - wind turbine body; 10 - tower; 20 - nacelle; 30 - generator; 40 - impeller; 41 - hub; 42 - blade; 50 - mooring system; 60 - seabed;
210 - vibration suppression device; 210a - first vibration suppression device; 210b - second vibration suppression device; 210c - third vibration suppression device; 211 - base; 211a - bottom wall; 211b - side wall; 211c - recessed cavity; 212 - mounting frame; 212a - hollow cavity; 213 - rotating disc; 214 - driving component; 215 - output shaft; 216 - connecting shaft; 220 - controller;
300 - support assembly; 310 - main floating body; 320 - sub floating body; 330 - connecting body; 340 - reinforcing body;
X - first direction; Y - second direction; aa - first axis; bb - second axis.

In the drawings, the same reference numerals are used for the same components. The drawings are not drawn to actual scale.

### DETAILED DESCRIPTION

The features and exemplary embodiments of various aspects of the present application will be described in detail below. In the following detailed description, many specific details are provided in order to provide a comprehensive understanding of the present application. However, it is obvious to those skilled in the art that the present application may be implemented without some of these specific details. The following description of the embodiments is only to provide a better understanding of the present application by illustrating examples of the present application. In the drawings and the following description, at least some of the well-known structures and technologies are not shown in order to avoid unnecessary blurring of the present application; and, for clarity, the sizes of some structures may be exaggerated. Furthermore, the features, structures or characteristics described hereinafter may be combined in any suitable manner in one or more embodiments.

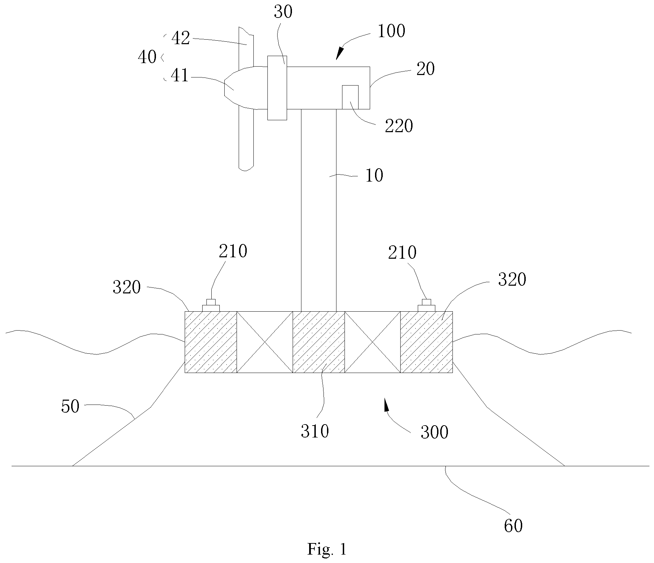

As shown in Fig. 1, an embodiment of the present application provides a wind generating set, including a wind turbine foundation and a wind turbine body, where the wind turbine body 100 includes a tower 10, a nacelle 20, a generator 30, and an impeller 40. The tower 10 is connected to the wind turbine foundation, the nacelle 20 is arranged at the top of the tower 10, and the generator 30 is arranged in the nacelle 20. In some examples, the generator 30 may be located outside the nacelle 20. Alternatively, in other examples, the generator 30 may be located inside the nacelle 20. The impeller 40 includes a hub 41 and a plurality of blades 42 connected to the hub 41. The impeller 40 is connected to a rotor of the generator through the hub 41, so as to drive the rotor to rotate relative to a stator, to achieve the power generation demand of the wind generating set. The wind turbine foundation floats in seawater, and in order to limit its range of motion, the wind turbine foundation is fixed to a seabed 60 through a mooring system 50 to achieve a certain range of motion constraints.

The stability of the wind turbine foundation directly affects the aerodynamic inflow angle of wind turbine body blades, which is directly related to the power generation capacity of the set. Therefore, how to ensure the stability of floating wind generating sets is one of the urgent problems to be solved in the field of wind power.

The water levels in different floating compartments are adjusted by power water pumps, and then the center position of the overall set is adjusted, to adjust the stability of the existing wind turbine foundation. This technical means has some shortcomings, such as slow system response due to the demand for adjusting huge water volume, and high cost of large-flow ballast water adjusting systems.

Based on this, an embodiment of the present application further provides a novel wind turbine foundation, which has a vibration suppression function, high response speed and good vibration suppression effect.

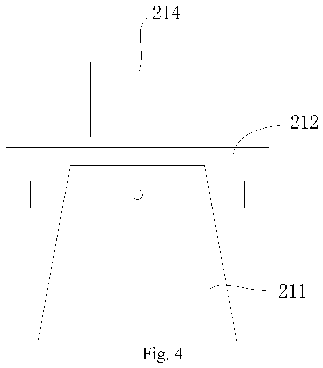

As shown in Fig. 1 to Fig. 4, the wind turbine foundation provided in the embodiment of the present application is configured for supporting the tower 10. The wind turbine foundation includes a support assembly 300 and a vibration system. The support assembly 300 includes a main floating body 310, a plurality of sub floating bodies 320, and connecting bodies 330 corresponding to each of the sub floating bodies 320. The plurality of sub floating bodies 320 are distributed around the main floating body 310 at intervals, each of the sub floating bodies 320 is connected to the main floating body 310 by the corresponding connecting body 330, and the main floating body 310 is configured for being connected to the tower 10. The vibration suppression system 200 includes vibration suppression devices 210, a first collector, and a controller 220. The vibration suppression devices 210 are connected to at least two of the plurality of sub floating bodies 320.

The vibration suppression device 210 includes a base 211, a mounting frame 212, a rotating disc 213, and a driving component 214. The driving component 214 is connected to the mounting frame 212 and can drive the rotating disc 213 to rotate relative to the mounting frame 212 about a first axis aa as a rotation center, the mounting frame 212 is rotatably connected to the base 211 and can rotate relative to the base 211 about a second axis bb as a rotation center, and the first axis aa intersects with the second axis bb. The first collector is configured to obtain a floating body vibration acceleration of the support assembly 300, and the controller 220 is configured to control, based on the floating body vibration acceleration, the driving component 214 of each vibration suppression device on the support assembly 300 to drive the rotating disc 213 to rotate to a predetermined rotational speed.

The support assembly 300 may include one main floating body 310, of a solid or hollow columnar structure. Optionally, the main floating body 310 may be cylindrical or prismatic.

The support assembly 300 may include three, four, or even more sub floating bodies 320. Optionally, the plurality of sub floating bodies 320 are distributed at intervals, optionally uniformly distributed at intervals, in a circumferential direction of the main floating body 310.

For example, the support assembly 300 may include three sub floating bodies 320, and the three sub floating bodies 320 are uniformly distributed at intervals in the circumferential direction of the main floating body 310.

The sub floating bodies 320 may be of solid or hollow columnar structures. Optionally, the sub floating bodies 320 may be cylindrical or prismatic. The shape and size of the sub floating bodies 320 may be the same as those of the main floating body 310. Alternatively, the size of the sub floating bodies 320 may be smaller than, optionally the same as, that of the main floating body 310.

The vibration suppression system 200 may include two or more vibration suppression devices 210, spaced apart from each other, and one vibration suppression device 210 may be provided on each sub floating body 320.

A plurality of connecting bodies 330 may be distributed at intervals in the circumferential direction of the main floating body 310. One end of each connecting body 330 is connected to the main floating body 310, and the other end radiates away from the main floating body 310 in a radial direction of the main floating body 310. The sub floating body 320 is connected to the end of each connecting body 330 away from the main floating body 310.

An angle of intersection between the first axis aa and the second axis bb is optionally 90 degrees.

The first collector and the controller 220 may be integrated on the wind turbine body 100 of the wind generating set, for example, arranged on the nacelle 20, or the first collector is arranged on the impeller 40, and the controller 220 is arranged in the nacelle 20. Alternatively, the controller 220 and the wind turbine body 100 may be arranged separately and controlled remotely.

The wind turbine foundation provided in the embodiment of the present application includes a support assembly 300 and a vibration suppression system, the support assembly 300 includes a main floating body 310 and a plurality of sub floating bodies 320, the main floating body 310 can be configured for being connected to the tower 10, the plurality of sub floating bodies 320 are distributed around the main floating body 310 at intervals, and each sub floating body 320 is connected to the main floating body 310 by the corresponding connecting body 330, so that the plurality of sub floating bodies 320 assist the main floating body 310 in supporting the tower 10 and other components, which can improve the support capacity and stability of the wind turbine foundation.

Moreover, the vibration suppression system 200 includes vibration suppression devices 210, a first collector, and a controller 220. In the case that the wind turbine foundation and the structure supported thereby vibrate, the first collector can obtain a floating body vibration acceleration of the support assembly 300. The vibration suppression device 210 includes a base 211, a mounting frame 212, a rotating disc 213, and a driving component 214, where the rotating disc 213 can be driven by the driving component 214 to rotate at a high speed relative to the mounting frame 212 about the first axis aa as the rotation center, the mounting frame 212 is rotatably connected to the base 211 and can rotate relative to the base 211 about the second axis bb intersecting with the first axis aa as the rotation center, and the controller 220 can control, based on the floating body vibration acceleration obtained by the first collector, the driving component 214 to drive the rotating disc 213 to rotate to a predetermined rotational speed. When driven by the driving component 214 to rotate at the high speed, the rotating disc 213 with certain mass has a large moment of inertia towards a rotating shaft extending along the first axis aa, remains stable in an inertial space, and points to a fixed direction. In the presence of external disturbance with precession, a moment perpendicular to an external force will be produced, thereby maintaining the stability of the rotating shaft extending along the first axis aa in the inertial space, suppressing the vibration of the structure, and ensuring the safety performance of the wind turbine foundation and the applied wind generating set. The first collector and the controller 220 can achieve automatic control on the wind turbine foundation, thereby improving the response speed of the wind turbine foundation in vibration suppression work.

As some optional embodiments, in the wind turbine foundation provided in the embodiments of the present application, the support assembly 300 further includes reinforcing bodies 340, connected between every two adjacent sub floating bodies 320, and the connecting bodies 330 and the reinforcing bodies 340 are of rod-like structures respectively. The reinforcing bodies 340 can connect the two adjacent floating bodies to improve the overall load-bearing capacity of the support assembly 300.

In some optional embodiments, a plurality of sub floating bodies 320 are configured with centers connected into a polygon, distances between the center of the main floating body 310 and the center of each sub floating body 320 are equal, the vibration suppression device 210 is provided on each sub floating body 320, and the controller 220 is configured to control, based on the floating body vibration acceleration, the driving component 214 of at least one vibration suppression device on the support assembly 300 to drive the rotating disc 213 to rotate to the predetermined rotational speed.

According to the wind turbine foundation provided in the embodiments of the present application, the main floating body 310 has the same load-bearing capacity at each place through the above settings, which improves stability.

In some optional embodiments, in the wind turbine foundation provided in the embodiment of the present application, the base 211 of the vibration suppression device 210 includes a bottom wall 211a and side walls 211b connected to the bottom wall 211a, the bottom wall 211a and the side walls 211b together enclose a recessed cavity 211c, and the mounting frame 212 extends at least partially into the recessed cavity 211c and is rotatably connected to the side walls 211b by a rotating shaft.

The recessed cavity 211c of the base 211 may be U-shaped with one side open. The bottom wall 211a and side walls 211b of the base 211 may be of regular plate-like structures. For example, the bottom wall 211a and the side wall 211b of the base 211 are of plate-like structures, and the side walls 211b are vertically connected to two sides of the bottom wall 211a in an extension direction of the second axis bb. The two side walls 211b are symmetrically distributed relative to the first axis aa.

The bottom wall 211a and the side wall 211b of the base 211 of the vibration suppression device 210 enclose a recessed cavity 211c, so the wind turbine foundation provided in the embodiments of the present application has a simple structure; and the bottom wall 211a is conducive to contact with the wind turbine body 100, which ensures the stability on the wind turbine body 100. Meanwhile, the recessed cavity 211c facilitates the insertion of the mounting frame 212 and the rotational connection with the base 211, and makes the structure of the vibration suppression device 210 compact to reduce the overall occupied volume, thereby reducing or avoiding the limitation of the mounting space for the vibration suppression device 210 by the wind turbine body 100.

As some optional embodiments, the mounting frame 212 may be of a disc-shaped or polygonal hollow plate-like structure, and is optionally polygonal. A connecting shaft 216 extending along the second axis bb may be provided on the mounting frame 212, and the mounting frame 212 is rotatably connected to the base 211 via the connecting shaft 216 and rotates relative to the base 211 about the second axis bb as the rotation center. Optionally, the mounting frame 212 is rotatably connected to the two side walls 211b by the connecting shaft 216. A gap is formed between the mounting frame 212 and the base 211 to avoid friction and interference between the bracket of the base 211 and the mounting frame 212 rotating relative to the base 211.

In some optional embodiments, the mounting frame 212 has a hollow cavity 212a, the rotating disc 213 is located inside the hollow cavity 212a and connected to the driving component 214, and the hollow cavity 212a is in a vacuum state. Through the above settings, the rotating disc 213 can be protected by the mounting frame 212. Moreover, in the case that the rotating disc 213 rotates inside the mounting frame 212, the friction energy dissipation of the rotating disc 213 rotating at a high speed in the hollow cavity inside the mounting frame 212 can be reduced.

In some optional embodiments, the rotating disc 213 is disc-shaped, an output shaft 215 is connected to an output end of the driving component 214, and the driving component 214 is located outside the mounting frame 212 and connected to the center of the rotating disc 213 by the output shaft 215 to drive the rotating disc 213 to rotate. The rotating disc 213 in the above structural form has a regular shape and good vibration suppression effect. The output shaft 215 can be understood as the aforementioned rotating shaft.

As some optional embodiments, the mounting frame 212 may be of a hollow disc structure. Optionally, the rotating disc 213 and the mounting frame 212 may be arranged coaxially, the output shaft 215 extends from the center of the mounting frame 212 and is connected to the rotating disc 213, and the driving component 214 may be located at a center position of the mounting frame 212 and drives the rotating disc 213 to rotate. Through the above settings, the vibration suppression device 210 is balanced in a non-vibration state of the wind generating set, and can quickly make a response when vibration occurs, to ensure vibration suppression requirements.

In some optional embodiments, the rotating disc 213 may be of a rigid structure with uniform mass distribution and axial symmetry, optionally made of a metal material, with good vibration suppression effect.

Optionally, two ends of the output shaft 215 in its extension direction can be inserted into the rotating disc 213 and rotate to fit the rotating disc 213, and the rotating disc 213 supports the output shaft 215.

In some optional embodiments, the vibration suppression device 210 is of an axisymmetric structure relative to the first axis aa. Through the above settings, in the presence of external disturbance with precession, a moment perpendicular to the external force is better generated to effectively suppress the vibration of the structure.

In some optional embodiments, the driving component 214 may be a motor, which can drive the rotating disc 213 to rotate at a high speed to optimize the vibration suppression effect.

In some optional embodiments, an electric control cabinet may be provided inside the nacelle 20 or tower 10, and at least one of the vibration suppression device 210, the collector, or the controller 220 is electrically connected to the electric control cabinet.

The electric control cabinet provided inside the nacelle 20 can ensure the electrical energy requirements of components such as the vibration suppression device 210 and the collector. In some optional embodiments, the controller 220 may be integrated into the electric control cabinet, which can provide protection, improve compact performance, facilitate the control on the vibration suppression device 210.

In some optional embodiments, the wind turbine foundation provided in the embodiments of the present application includes three sub floating bodies 320, and the second axis bb of the vibration suppression device 210 arranged on each sub floating body 320 intersects another. Through the above settings, the vibration suppression devices 210 on the sub floating bodies 320 can cooperate to ensure the vibration suppression effect.

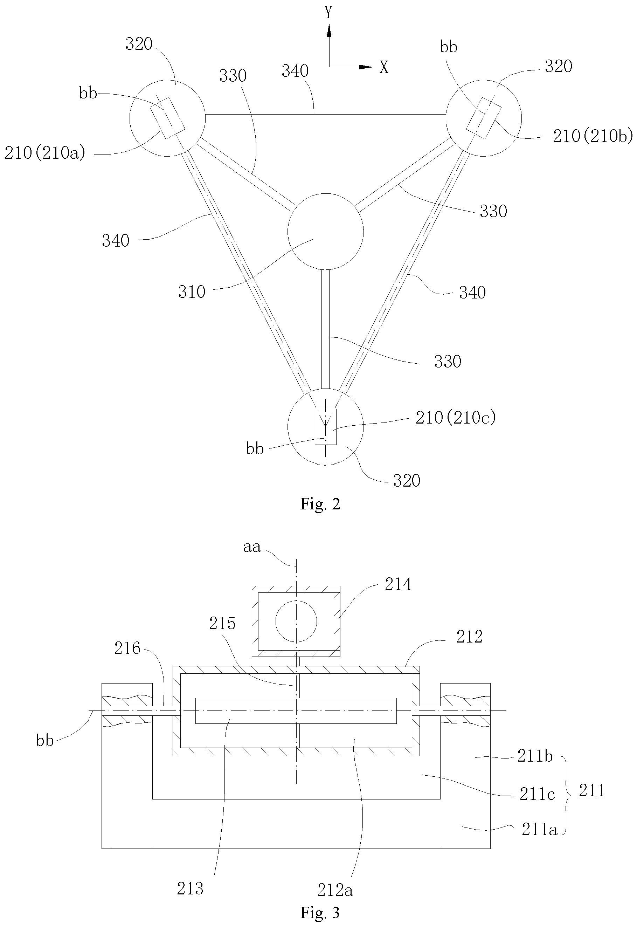

As shown in Fig. 2 to Fig. 5, as some optional embodiments, in the wind turbine foundation provided in the embodiment of the present application, the floating body vibration acceleration includes a first direction rotation acceleration α around a first direction X and a second direction rotation acceleration β around a second direction Y perpendicular to, the first direction X; the three vibration suppression devices 210 include a first vibration suppression device 210a, a second vibration suppression device 210b, and a third vibration suppression device 210c; the second axis bb of the first vibration suppression device 210a extends along a line connecting the centers of the sub floating body 320 where the first vibration suppression device 210a is located and the sub floating body 320 where the third vibration suppression device 210c is located, the second axis bb of the second vibration suppression device 210b extends along a line connecting the centers of the sub floating body 320 where the second vibration suppression device 210b is located and the sub floating body 320 where the third vibration suppression device 210c is located, and the second axis bb of the third vibration suppression device 210c extends along the second direction Y; the controller 220 is configured to:

in the case that a first-order spectral data corresponding to the first direction rotation acceleration is less than or equal to m, control the rotating discs 213 of the first vibration suppression device 210a and the second vibration suppression device 210b to be stationary, i.e. n=0 (n represents a speed), and control the rotating disc 213 of the third vibration suppression device 210c to rotate within a first speed range, i.e. 0 < n ≤ A;

in the case that the first-order spectral data corresponding to the first direction rotation acceleration is greater than m and less than or equal to k, control the rotating discs 213 of the first vibration suppression device 210a and the second vibration suppression device 210b to rotate within the first speed range, i.e. 0 < n ≤ A, and control the rotating disc 213 of the third vibration suppression device 210c to rotate within a second speed range, i.e. A < n ≤ B, where a minimum value of the second speed range is greater than a maximum value of the first speed range; and

in the case that the first-order spectral data corresponding to the first direction rotation acceleration is greater than k and less than or equal to L, control the rotating discs 213 of the first vibration suppression device 210a, the second vibration suppression device 210b, and the third vibration suppression device 210c to rotate within the second speed range, i.e. A < n ≤ B.

The values of m, k, and L can be specifically set according to the wind turbine foundation, a wind farm environment where the wind generating set is located, and a vibration limit that the corresponding model of the set can withstand. For example, the value of m may be 0.04 g, the value of k may be 0.06 g, and the value of L may be 0.08 g. In some embodiments, the value of m may be greater than or less than 0.04 g, the value of k may be greater than or less than 0.06 g, and similarly, the value of L may be greater than or less than 0.08 g.

The value of A may be 20000 rpm, and the value of B may be 35000 rpm. For example, the value of the first speed range may be: 0 < n ≤ 20000 rpm. For example, the value of the second speed range may be: 20000 rpm < n ≤ 35000 rpm.

Through the above settings, the wind turbine foundation provided in the embodiments of the present application can automatically suppress vibration based on the value of the first direction X rotation acceleration, and can provide corresponding modes based on different first direction rotation accelerations, so that its vibration suppression ability matches the vibration amplitude, to avoid the occurrence of under vibration suppression or over vibration suppression and ensure the vibration suppression effect.

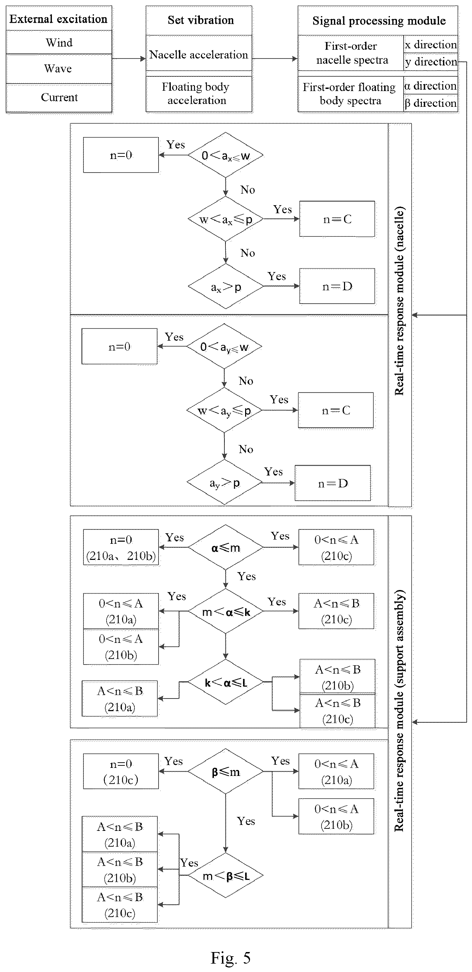

As shown in Fig. 5, in some optional embodiments, in the wind turbine foundation provided by the above embodiments, the controller 220 is further configured to:
in the case that a first-order spectral data corresponding to the second direction rotation acceleration is less than or equal to m, control the rotating disc 213 of the third vibration suppression device 210c to be stationary, i.e. n=0, and control the rotating discs 213 of the first vibration suppression device 210a and the second vibration suppression device 210b to rotate within the first speed range, i.e. 0 < n ≤ A; and
in the case that the first-order spectral data corresponding to the second direction rotation acceleration is greater than m and less than or equal to L, control the rotating disc 213 of the third vibration suppression device 210c to be stationary, i.e. n=0, and control the rotating discs 213 of the first vibration suppression device 210a and the second vibration suppression device 210b to rotate within the second speed range, i.e. A< n ≤ B.

The values of m and L, the first speed range, and the second speed range are the same as above and will not be repeated here.

Through the above settings, the wind turbine foundation provided in the embodiments of the present application can automatically suppress vibration based on the value of the second direction rotation acceleration, and can provide corresponding modes based on different second direction rotation accelerations, so that its vibration suppression ability matches the vibration amplitude, to avoid the occurrence of under vibration suppression or over vibration suppression and ensure the vibration suppression effect.

As shown in Fig. 5, in some optional embodiments, the controller 220 may include a signal processing module and a real-time response module. The signal processing module is configured to perform Fourier transform on time domain data of the floating body vibration acceleration to obtain spectral data of the floating body acceleration, where the spectral data may include the first-order spectral data corresponding to the first direction rotation acceleration and the first-order spectral data corresponding to the second direction rotation acceleration; and the real-time response module is configured to control, based on the spectral data of the floating body vibration acceleration, the driving component 214 to drive the rotating disc 213 to rotate to the predetermined rotational speed.

Through the above settings, the vibration information of the support assembly 300 obtained by the first collector is matched with the speed of the rotating disc 213 to optimize the vibration suppression effect.

It can be understand that, it is only an optional embodiment that the second axis bb of the first vibration suppression device 210a extends along the line connecting the centers of the sub floating body 320 where the first vibration suppression device 210a is located and the sub floating body 320 where the third vibration suppression device 210c is located, the second axis bb of the second vibration suppression device 210b extends along a line connecting the centers of the sub floating body 320 where the second vibration suppression device 210b is located and the sub floating body 320 where the third vibration suppression device 210c is located, and the second axis bb of the third vibration suppression device 210c extends along the second direction Y, to which the present application is not limited to.

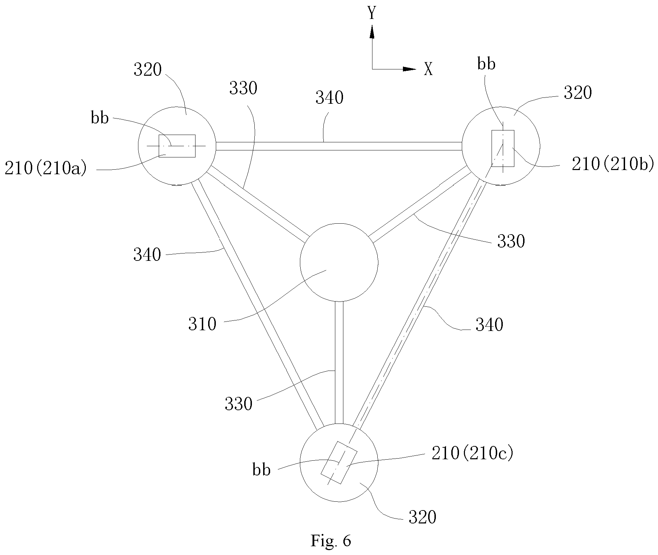

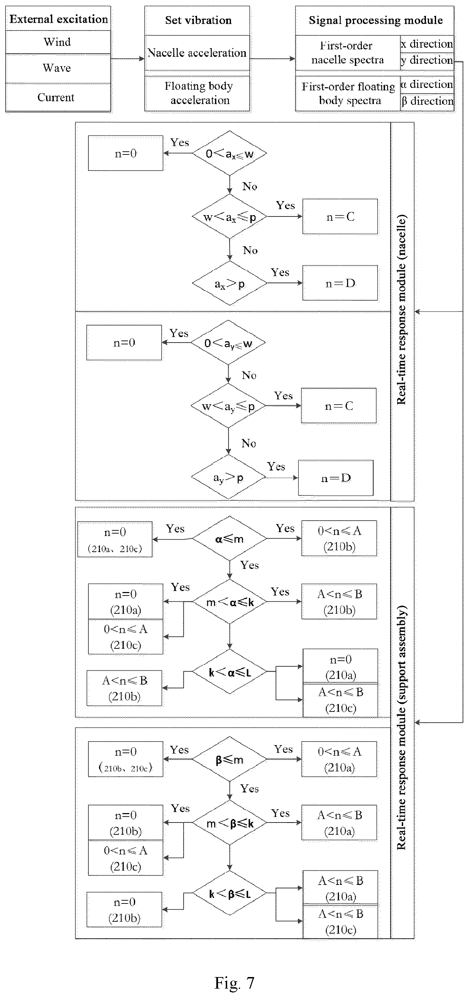

As shown in Fig. 6 and Fig. 7, in some embodiments, the floating body vibration acceleration may further include the first direction rotation acceleration around the first direction X and the second direction rotation acceleration around the second direction Y, and the first direction X and the second direction Y are perpendicular to each other; the three vibration suppression devices 210 include a first vibration suppression device 210a, a second vibration suppression device 210b, and a third vibration suppression device 210c; the second axis bb of the first vibration suppression device 210a extends along the first direction X, the second axis bb of the second vibration suppression device 210b extends along the second direction Y, and the second axis bb of the third vibration suppression device 210c extends along the line connecting the centers of the sub floating body 320 where the second vibration suppression device 210b is located and the sub floating body 320 where the third vibration suppression device 210c is located; the controller 220 is configured to:
in the case that a first-order spectral data corresponding to the first direction rotation acceleration is less than or equal to m, control the rotating discs 213 of the first vibration suppression device 210a and the third vibration suppression device 210c to be stationary, i.e. n=0, and control the rotating disc 213 of the second vibration suppression device 210b to rotate within the first speed range, i.e. 0 < n ≤ A;
in the case that the first-order spectral data corresponding to the first direction rotation acceleration is greater than m and less than or equal to k, control the rotating disc 213 of the first vibration suppression device 210a to be stationary, i.e. n=0, control the rotating disc 213 of the third vibration suppression device 210c to rotate within the first speed range, and control the rotating disc 213 of the second vibration suppression device 210b to rotate within the second speed range, i.e. 0 < n ≤ A, where the minimum value of the second speed range is greater than the maximum value of the first speed range; and
in the case that the first-order spectral data corresponding to the first direction rotation acceleration is greater than k and less than or equal to L, control the rotating disc 213 of the first vibration suppression device 210a to be stationary, i.e. n=0, and control the rotating disc 213 of the third vibration suppression device 210c and the rotating disc 213 of the second vibration suppression device 210b to rotate within the second speed range, i.e. A < n ≤ B.

The values of m, k and L, the first speed range, and the second speed range are the same as above and will not be repeated here.

Through the above settings, the wind turbine foundation provided in the embodiments of the present application can automatically suppress vibration based on the value of the first direction rotation acceleration, and can provide corresponding control modes based on different first direction rotation accelerations, so that its vibration suppression ability matches the vibration amplitude, to avoid the occurrence of under vibration suppression or over vibration suppression and ensure the vibration suppression effect.

In some optional embodiments, in the case that the second axis bb of the first vibration suppression device 210a extends along the first direction X, the second axis bb of the second vibration suppression device 210b extends along the second direction Y, and the second axis bb of the third vibration suppression device 210c extends along the line connecting the centers of the sub floating body 320 where the second vibration suppression device 210b is located and the sub floating body 320 where the third vibration suppression device 210c is located, the controller 220 is further configured to:
in the case that a first-order spectral data corresponding to the second direction rotation acceleration is less than or equal to m, control the rotating discs 213 of the second vibration suppression device 210b and the third vibration suppression device 210c to be stationary, i.e. n=0, and control the rotating disc 213 of the first vibration suppression device 210a to rotate within the first speed range, i.e. 0 < n ≤ A;
in the case that the first-order spectral data corresponding to the second direction rotation acceleration is greater than m and less than or equal to k, control the rotating disc 213 of the second vibration suppression device 210b to be stationary, i.e. n=0, control the rotating disc 213 of the third vibration suppression device 210c to rotate within the first speed range, i.e. 0 < n ≤ A, and control the rotating disc 213 of the first vibration suppression device 210a to rotate within the second speed range, i.e. A < n ≤ B; and
in the case that the first-order spectral data corresponding to the second direction rotation acceleration is greater than k and less than or equal to L, control the rotating disc 213 of the second vibration suppression device 210b to be stationary, i.e. n=0, and control the rotating disc 213 of the third vibration suppression device 210c and the rotating disc 213 of the first vibration suppression device 210a to rotate within the second speed range, i.e. A < n ≤ B.

The values of m, k and L, the first speed range, and the second speed range are the same as above and will not be repeated here.

Through the above settings, the wind turbine foundation provided in the embodiments of the present application can also automatically suppress vibration based on the value of the second direction Y rotation acceleration, and can provide corresponding modes based on different second direction Y rotation accelerations, so that its vibration suppression ability matches the vibration amplitude, to avoid the occurrence of under vibration suppression or over vibration suppression and ensure the vibration suppression effect.

In some optional embodiments, the wind generating set provided in the embodiments of the present application includes the wind turbine foundation provided in the above embodiments, and the tower 10 of the wind turbine body 100 is connected to the main floating body 310.

The wind generating set provided in the embodiments of the present application, including the wind turbine foundation provided in the above embodiments, has an automatic vibration suppression function, fast vibration suppression response, and high safety.

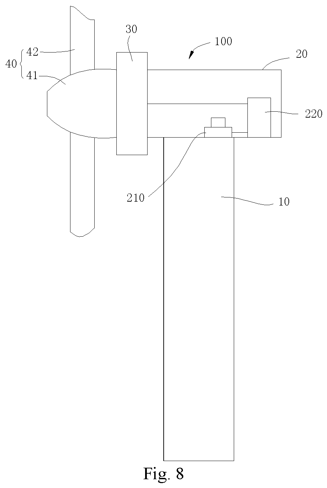

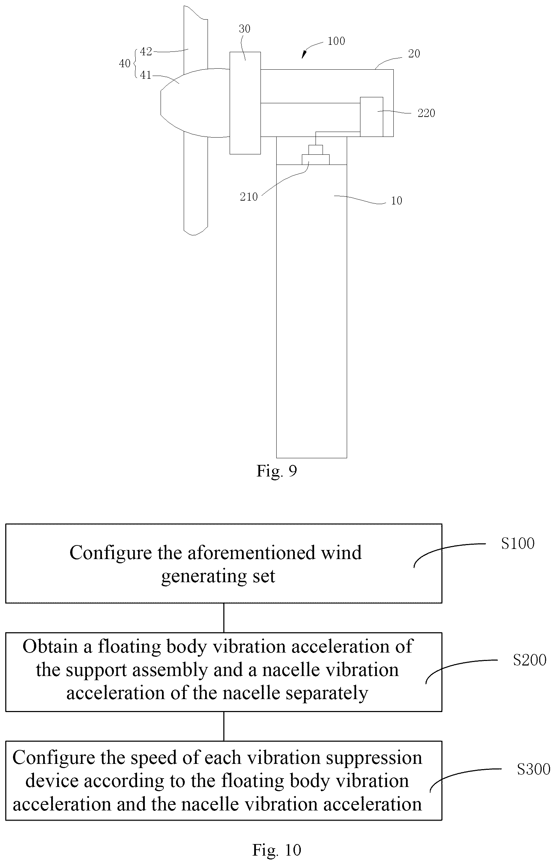

As shown in Fig. 8 and Fig. 9, in some optional embodiments, in the wind generating set provided in the embodiments of the present application, the vibration suppression device is provided on at least one of the tower 10 or the nacelle 20, the vibration suppression system 200 further includes a second collector configured to obtain a nacelle 20 vibration acceleration of the nacelle 20, and the controller 220 is further configured to control, based on the nacelle 20 vibration acceleration, the driving component 214 of each vibration suppression device on the wind turbine body 100 to drive the rotating disc 213 to rotate to the predetermined rotational speed.

According to the wind generating set provided in the embodiments of the present application, the vibration suppression device 210 is further provided on at least one of the tower 10 or the nacelle 20 of the wind generating set, the vibration suppression system 200 further includes the second collector, and the controller 220 can also control the driving component 214 of each vibration suppression device 210 of the wind turbine body 100 based on the nacelle 20 vibration acceleration information obtained by the second collector, to drive the rotating disc 213 to rotate to the predetermined rotational speed, so that the wind turbine foundation and the wind turbine body 100 can suppress vibration synchronously, thereby improving the overall stability of the wind generating set and ensuring its power generation efficiency.

The wind turbine body 100 of the wind generating set provided in the embodiments of the present application may be provided with two or more vibration suppression devices 210 in the nacelle 20. This is an optional embodiment. In some embodiments, at least one of the two or more vibration suppression devices 210 is located in the nacelle 20 and at least one of the vibration suppression devices 210 is located at the top of the tower 10 close to the nacelle 20.

In some other examples, the two or more vibration suppression devices 210 may be all located at the top of the tower 10 close to the nacelle 20, the two or more vibration suppression devices 210 are spaced apart in the circumferential direction of the tower 10, and each vibration suppression device 210 is at the same height.

In some optional embodiments, the signal processing module of the controller 220 may be further configured to perform Fourier transform on time domain data of the nacelle 20 vibration acceleration to obtain spectral data of the nacelle 20 vibration acceleration, where the spectral data may include the first-order spectral data of the first direction vibration acceleration and the first-order spectral data of the second direction vibration acceleration; and the real-time response module is further configured to control, based on the spectral data of the nacelle vibration acceleration, the driving component 214 of the corresponding vibration suppression device 210 on the wind turbine body 100 to drive the rotating disc 213 to rotate to the predetermined rotational speed.

In some optional embodiments, the spectral data of the vibration acceleration of the wind generating set provided in the embodiments of the present application includes a first-order spectral data of the nacelle 20 in the first direction X and a first-order spectral data thereof in the second direction Y; and the controller 220 is configured to:
in the case that values of the first-order spectral data a of the nacelle 20 in the first direction X and the first-order spectral data a thereof in the second direction Y are both less than or equal to a value of w, control the driving component 214 of each vibration suppression device 210 on the wind turbine body 100 to stop, so that the speed of each rotating disc 213 relative to the mounting frame 212 is 0;
in the case that at least one of the values of the first-order spectral data of the nacelle 20 in the first direction X or the first-order spectral data thereof in the second direction Y is greater than w and less than or equal to p, control the driving component 214 of at least one vibration suppression device 210 on the wind turbine body 100 to drive the rotating disc 213 to rotate at a third speed, i.e. n=C; and
in the case that at least one of the values of the first-order spectral data of the nacelle 20 in the first direction X or the first-order spectral data thereof in the second direction Y is greater than p, control the driving component 214 of at least one vibration suppression device 210 on the wind turbine body 100 to drive the rotating disc 213 to rotate at a fourth speed, i.e. n=D, where the fourth speed is greater than the third speed.

The values of w and p can be specifically set according to a wind farm environment where the wind generating set is located, and a vibration limit that the corresponding model of the set can withstand. For example, the value of w may be 0.06 g, and the value of p may be 0.08 g. In some embodiments, the value of w may be greater than or less than 0.06 g, and similarly, the value of p may be greater than or less than 0.08 g.

For example, the value of the third speed may be 20000 rpm, and the value of the fourth speed may be 35000 rpm. It can be understand that, the above is only an optional embodiment, and the third speed and the fourth speed are not limited to the above values and can be set according to the wind farm environment where the wind generating set is located and the vibration limit that the corresponding model of the set can withstand.

As shown in Fig. 5 and Fig. 7, in the wind generating set provided in the embodiments of the present application, the spectral data of the vibration acceleration includes a first-order spectral data ax of the wind turbine body 100 in the first direction X and a first-order spectral data ay thereof in the second direction Y, and the controller 220 is configured in the above control mode, that is, can control, based on the values of the first-order spectral data in the first direction X and the second direction Y, the driving component 214 of the vibration suppression device 210 at the corresponding position to drive the rotating disc 213 to rotate at the corresponding speed, thereby achieving automatic vibration suppression of the wind generating set, and providing corresponding modes based on different spectral data to match its vibration suppression ability with the vibration amplitude, avoiding the occurrence of under vibration suppression or over vibration suppression, and ensuring the vibration suppression effect.

In some optional implementations, in the case that the value of the first-order spectral data in the first direction X is less than or equal to the value of w, the driving component 214 of each vibration suppression device 210 can be controlled to stop, so that the speed of each rotating disc 213 relative to the mounting frame 212 is 0.

In the case that the first-order spectral data in the first direction X is greater than w and less than or equal to p, the driving component 214 of at least one vibration suppression device 210 is controlled to drive the rotating disc 213 to rotate at the third speed, where the at least one vibration suppression device 210 may be the vibration suppression device 210 of which the second axis bb extends along the second direction Y.

In the case that the first-order spectral data of the first direction X is greater than p, the driving component 214 of at least one vibration suppression device 210 is controlled to drive the rotating disc 213 to rotate at the fourth speed, where the fourth speed is greater than the third speed, and the at least one vibration suppression device 210 may be the vibration suppression device 210 of which the second axis bb extends along the second direction Y.

In some other embodiments, in the case that the value of the first-order spectral data in the second direction Y is less than or equal to the value of w, the driving component 214 of each vibration suppression device 210 can be controlled to stop, so that the speed of each rotating disc 213 relative to the mounting frame 212 is 0.

In the case that the first-order spectral data in the second direction Y is greater than w and less than or equal to p, the driving component 214 of at least one vibration suppression device 210 is controlled to drive the rotating disc 213 to rotate at the third speed, where the at least one vibration suppression device 210 may be the vibration suppression device 210 of which the second axis bb extends along the first direction X.

In the case that the first-order spectral data in the second direction Y is greater than p, the driving component 214 of at least one vibration suppression device 210 is controlled to drive the rotating disc 213 to rotate at the fourth speed, where the fourth speed is greater than the third speed, and the at least one vibration suppression device 210 may be the vibration suppression device 210 of which the second axis bb extends along the first direction X.

As shown in Fig. 1 to Fig. 10, in another aspect, embodiments of the present application further provide a method for controlling a wind generating set, including:
S100. configuring the wind generating set provided in the above embodiments;
S200. obtaining a floating body vibration acceleration of the support assembly 300 and a nacelle vibration acceleration of the nacelle 20 separately;
S300. configuring the speed of each vibration suppression device 210 based on the floating body vibration acceleration and the nacelle 20 vibration acceleration.

The method provided in the embodiments of the present application is used for controlling the wind generating set provided in the above embodiments. By obtaining the floating body vibration acceleration of the support assembly 300 and the nacelle 20 vibration acceleration of the wind turbine body 100, the vibration suppression function of the wind generating set can be automatically controlled. In addition, the speed of each vibration suppression device 210 is configured based on the floating body vibration acceleration and the nacelle 20 vibration acceleration, which can avoid the occurrence of under vibration suppression or over vibration suppression.

In some optional embodiments, before step S300, the method provided in the embodiments of the present application further includes:
determining, based on the floating body vibration acceleration and the nacelle 20 vibration acceleration, a first-order spectral data of the nacelle 20 in the first direction X and a first-order spectral data thereof in the second direction Y, a first-order spectral data of the support assembly 300 in the first direction X and a first-order spectral data thereof in the second direction Y, respectively.

In some optional embodiments, in the method provided in the embodiments of the present application, in the case that the first direction X and the second direction Y are perpendicular to each other, the three vibration suppression devices 210 include a first vibration suppression device 210a, a second vibration suppression device 210b, and a third vibration suppression device 210c, the second axis bb of the first vibration suppression device 210a extends along the line connecting the centers of the sub floating body 320 where the first vibration suppression device 210a is located and the sub floating body 320 where the third vibration suppression device 210c is located, the second axis bb of the second vibration suppression device 210b extends along the line connecting the centers of the sub floating body 320 where the second vibration suppression device 210b is located and the sub floating body 320 where the third vibration suppression device 210c is located, and the second axis bb of the third vibration suppression device 210c extends along the second direction Y, step S300 includes:
in the case that the first-order spectral data of the support assembly 300 in the first direction X is less than or equal to m, controlling the rotating discs 213 of the first vibration suppression device 210a and the second vibration suppression device 210b to be stationary, i.e. n=0 (n represents a speed), and controlling the rotating disc 213 of the third vibration suppression device 210c to rotate within a first speed range, i.e. 0 < n ≤ A;
in the case that the first-order spectral data of the support assembly 300 in the first direction X is greater than m and less than or equal to k, controlling the rotating discs 213 of the first vibration suppression device 210a and the second vibration suppression device 210b to rotate within the first speed range, i.e. 0 < n ≤ A, and controlling the rotating disc 213 of the third vibration suppression device 210c to rotate within a second speed range, i.e. A < n ≤ B, where a minimum value of the second speed range is greater than a maximum value of the first speed range; and
in the case that the first-order spectral data of the support assembly 300 in the first direction X is greater than k and less than or equal to L, controlling the rotating discs 213 of the first vibration suppression device 210a, the second vibration suppression device 210b, and the third vibration suppression device 210c to rotate within the second speed range, i.e. A < n ≤ B.

The values of m, k, and L can be specifically set according to the wind turbine foundation, a wind farm environment where the wind generating set is located, and a vibration limit that the corresponding model of the set can withstand. For example, the value of m may be 0.04 g, the value of k may be 0.06 g, and the value of L may be 0.08 g. In some embodiments, the value of m may be greater than or less than 0.04 g, the value of k may be greater than or less than 0.06 g, and similarly, the value of L may be greater than or less than 0.08 g.

The value of A may be 20000 rpm, and the value of B may be 35000 rpm. For example, the value of the first speed range may be: 0 < n ≤ 20000 rpm. For example, the value of the second speed range may be: 20000 rpm < n ≤ 35000 rpm.

In the method provided in the embodiments of the present application, through the above settings, the wind generating set can automatically suppress vibration based on the value of the rotation acceleration of the wind turbine foundation in the first direction X, and can provide corresponding modes based on different first direction X rotation accelerations, so that its vibration suppression ability matches the vibration amplitude, to avoid the occurrence of under vibration suppression or over vibration suppression and ensure the vibration suppression effect.

In some optional embodiments, based on the method provided in the above embodiments, step S300 further includes:
in the case that the first-order spectral data of the support assembly 300 in the second direction Y is less than or equal to m, controlling the rotating disc 213 of the third vibration suppression device 210c to be stationary, i.e. n=0, and controlling the rotating discs 213 of the first vibration suppression device 210a and the second vibration suppression device 210b to rotate within the first speed range, i.e. 0 < n ≤ A; and
in the case that the first-order spectral data of the support assembly 300 in the second direction Y is greater than m and less than or equal to L, controlling the rotating disc 213 of the third vibration suppression device 210c to be stationary, i.e. n=0, and controlling the rotating discs 213 of the first vibration suppression device 210a and the second vibration suppression device 210b to rotate within the second speed range, i.e. A< n ≤ B.

The values of m and L, the first speed range, and the second speed range are the same as above and will not be repeated here.

In some optional embodiments, in the case that the first direction X and the second direction Y are perpendicular to each other, the three vibration suppression devices 210 include a first vibration suppression device 210a, a second vibration suppression device 210b, and a third vibration suppression device 210c, the second axis bb of the first vibration suppression device 210a extends along the first direction X, the second axis bb of the second vibration suppression device 210b extends along the second direction Y, and the second axis bb of the third vibration suppression device 210c extends along the line connecting the centers of the sub floating body 320 where the second vibration suppression device 210b is located and the sub floating body 320 where the third vibration suppression device 210c is located, step S300 includes:
in the case that the first-order spectral data of the support assembly 300 in the first direction X is less than or equal to m, controlling the rotating discs 213 of the first vibration suppression device 210a and the third vibration suppression device 210c to be stationary, i.e. n=0, and controlling the rotating disc 213 of the second vibration suppression device 210b to rotate within the first speed range, i.e. 0 < n ≤ A;
in the case that the first-order spectral data of the support assembly 300 in the first direction X is greater than m and less than or equal to k, controlling the rotating disc 213 of the first vibration suppression device 210a to be stationary, i.e. n=0, controlling the rotating disc 213 of the third vibration suppression device 210c to rotate within the first speed range, and controlling the rotating disc 213 of the second vibration suppression device 210b to rotate within the second speed range, i.e. 0 < n ≤ A, where the minimum value of the second speed range is greater than the maximum value of the first speed range; and
in the case that the first-order spectral data of the support assembly 300 in the first direction X is greater than k and less than or equal to L, controlling the rotating disc 213 of the first vibration suppression device 210a to be stationary, i.e. n=0, and controlling the rotating disc 213 of the third vibration suppression device 210c and the rotating disc 213 of the second vibration suppression device 210b to rotate within the second speed range, i.e. A < n ≤ B.

The values of m, k and L, the first speed range, and the second speed range are the same as above and will not be repeated here.

Through the above settings, the method provided in the embodiments of the present application can also achieve automatic vibration suppression based on the value of the first direction X rotation acceleration, and can provide corresponding control modes based on different first direction X rotation accelerations, so that its vibration suppression ability matches the vibration amplitude, to avoid the occurrence of under vibration suppression or over vibration suppression and ensure the vibration suppression effect.

In some optional embodiments, in the case that the second axis bb of the first vibration suppression device 210a extends along the first direction X, the second axis bb of the second vibration suppression device 210b extends along the second direction Y, and the second axis bb of the third vibration suppression device 210c extends along the line connecting the centers of the sub floating body 320 where the second vibration suppression device 210b is located and the sub floating body 320 where the third vibration suppression device 210c is located, step S300 further includes:
in the case that the first-order spectral data of the support assembly 300 in the second direction Y is less than or equal to m, controlling the rotating discs 213 of the second vibration suppression device 210b and the third vibration suppression device 210c to be stationary, i.e. n=0, and controlling the rotating disc 213 of the first vibration suppression device 210a to rotate within the first speed range, i.e. 0 < n ≤ A;
in the case that the first-order spectral data of the support assembly 300 in the second direction Y is greater than m and less than or equal to k, controlling the rotating disc 213 of the second vibration suppression device 210b to be stationary, i.e. n=0, controlling the rotating disc 213 of the third vibration suppression device 210c to rotate within the first speed range, i.e. 0 < n ≤ A, and controlling the rotating disc 213 of the first vibration suppression device 210a to rotate within the second speed range, i.e. A < n ≤ B; and
in the case that the first-order spectral data of the support assembly 300 in the second direction Y is greater than k and less than or equal to L, controlling the rotating disc 213 of the second vibration suppression device 210b to be stationary, i.e. n=0, and controlling the rotating disc 213 of the third vibration suppression device 210c and the rotating disc 213 of the first vibration suppression device 210a to rotate within the second speed range, i.e. A < n ≤ B.

The values of m, k and L, the first speed range, and the second speed range are the same as above and will not be repeated here.

Through the above settings, the method provided in the embodiments of the present application can also automatically suppress vibration based on the value of the second direction Y rotation acceleration, and can provide corresponding modes based on different second direction Y rotation accelerations, so that its vibration suppression ability matches the vibration amplitude, to avoid the occurrence of under vibration suppression or over vibration suppression and ensure the vibration suppression effect.

In some optional embodiments, in the method provided in the above embodiments of the present application, step S300 further includes:
in the case that the first-order spectral data ax of the nacelle 20 in the first direction X and the first-order spectral data ay thereof in the second direction Y are both less than or equal to a value of w, controlling the driving component 214 of each vibration suppression device 210 on the wind turbine body 100 to stop, so that the speed of each rotating disc 213 relative to the mounting frame 212 is 0;
in the case that at least one of the values of the first-order spectral data of the nacelle 20 in the first direction X and the first-order spectral data thereof in the second direction Y is greater than w and less than or equal to p, controlling the driving component 214 of at least one vibration suppression device 210 on the wind turbine body 100 to drive the rotating disc 213 to rotate at a third speed, i.e. n=C; and
in the case that at least one of the values of the first-order spectral data of the nacelle 20 in the first direction X and the first-order spectral data thereof in the second direction Y is greater than p, controlling the driving component 214 of at least one vibration suppression device 210 on the wind turbine body 100 to drive the rotating disc 213 to rotate at a fourth speed, i.e. n=D, where the fourth speed is greater than the third speed.

The values of w and p can be specifically set according to a wind farm environment where the wind generating set is located, and a vibration limit that the corresponding model of the set can withstand. For example, the value of w may be 0.06 g, and the value of p may be 0.08 g. In some embodiments, the value of w may be greater than or less than 0.06 g, and similarly, the value of p may be greater than or less than 0.08 g.

For example, the value of the third speed may be 20000 rpm, and the value of the fourth speed may be 35000 rpm. Understandably, the above is only an optional embodiment, and the third speed and the fourth speed are not limited to the above values and can be set according to the wind farm environment where the wind generating set is located and the vibration limit that the corresponding model of the set can withstand.

The method provided in the embodiments of the present application can control, based on the values of the first-order spectral data in the first direction X and the second direction Y, the driving component 214 of the vibration suppression device 210 at the corresponding position to drive the rotating disc 213 to rotate at the corresponding speed, thereby achieving automatic vibration suppression of the wind generating set, providing corresponding modes based on different spectral data to match its vibration suppression ability with the vibration amplitude, avoiding the occurrence of under vibration suppression or over vibration suppression, and ensuring the vibration suppression effect.

In some optional embodiments, in the case that the value of the first-order spectral data in the first direction X is less than or equal to the value of w, the driving component 214 of each vibration suppression device 210 can be controlled to stop, so that the speed of each rotating disc 213 relative to the mounting frame 212 is 0.

In the case that the first-order spectral data in the first direction X is greater than w and less than or equal to p, the driving component 214 of at least one vibration suppression device 210 is controlled to drive the rotating disc 213 to rotate at the third speed, where the at least one vibration suppression device 210 may be the vibration suppression device 210 of which the second axis bb extends along the second direction Y.

In the case that the first-order spectral data of the first direction X is greater than p, the driving component 214 of at least one vibration suppression device 210 is controlled to drive the rotating disc 213 to rotate at the fourth speed, where the fourth speed is greater than the third speed, and the at least one vibration suppression device 210 may be the vibration suppression device 210 of which the second axis bb extends along the second direction Y.

In some other embodiments, in the case that the value of the first-order spectral data in the second direction Y is less than or equal to the value of w, the driving component 214 of each vibration suppression device 210 can be controlled to stop, so that the speed of each rotating disc 213 relative to the mounting frame 212 is 0.

In the case that the first-order spectral data in the second direction Y is greater than w and less than or equal to p, the driving component 214 of at least one vibration suppression device 210 is controlled to drive the rotating disc 213 to rotate at the third speed, where the at least one vibration suppression device 210 may be the vibration suppression device 210 of which the second axis bb extends along the first direction X.

In the case that the first-order spectral data in the second direction Y is greater than p, the driving component 214 of at least one vibration suppression device 210 is controlled to drive the rotating disc 213 to rotate at the fourth speed, where the fourth speed is greater than the third speed, and the at least one vibration suppression device 210 is the vibration suppression device 210 of which the second axis bb extends along the first direction X.

Although the present application is described with reference to the preferred embodiments, various improvements can be made and equivalents can be substituted for components therein without departing from the scope of the present application. In particular, as long as there is no structural conflict, various technical features mentioned in the embodiments can be combined in any way. The present application is not limited to the specific embodiments disclosed herein, but includes all technical solutions falling within the scope of the claims.

## Claims

1. A wind turbine foundation configured for supporting a tower, the wind turbine foundation comprising:
a support assembly comprising a main floating body, a plurality of sub floating bodies, and connecting bodies corresponding to each of the sub floating bodies, the plurality of sub floating bodies being distributed around the main floating body at intervals, each of the sub floating bodies being connected to the main floating body via a corresponding one of the connecting bodies, and the main floating body being configured to connect to the tower; and
a vibration suppression system comprising vibration suppression devices, a first collector, and a controller, the vibration suppression devices being connected to at least two of the sub floating bodies, wherein
at least one of the vibration suppression devices comprises a base, a mounting frame, a rotating disc, and a driving component, the driving component being connected to the mounting frame and configured to drive the rotating disc to rotate relative to the mounting frame about a first axis aa as a rotation center, the mounting frame being rotatably connected to the base and configured to rotate relative to the base about a second axis bb as a rotation center, the second axis bb intersecting with the first axis aa;
the first collector is configured to obtain a floating body vibration acceleration of the support assembly; and
the controller is configured to control, based on the floating body vibration acceleration, the driving component of each of the vibration suppression devices on the support assembly to drive the rotating disc to rotate to a predetermined rotational speed.

2. The wind turbine foundation according to claim 1, wherein the support assembly further comprises reinforcing bodies, each of the reinforcing bodies being connected between every two adjacent of the sub floating bodies, and the connecting bodies and the reinforcing bodies being of rod-like structures respectively.

3. The wind turbine foundation according to claim 1, wherein the plurality of sub floating bodies are configured with centers connected into a polygon, distances between the center of the main floating body and the centers of the sub floating bodies are equal, each of the sub floating bodies is provided with the vibration suppression device, and the controller is configured to control, based on the floating body vibration acceleration, the driving component of at least one of the vibration suppression devices on the support assembly to drive the rotating disc to rotate to the predetermined rotational speed.

4. The wind turbine foundation according to claim 3, wherein the support assembly comprises three sub floating bodies, and the second axis bb of the vibration suppression device arranged on each of the sub floating bodies intersects with another.

5. The wind turbine foundation according to claim 4, wherein the floating body vibration acceleration comprises a first direction X rotation acceleration around a first direction X and a second direction Y rotation acceleration around a second direction Y perpendicular to the first direction X;
three of the vibration suppression devices comprise a first vibration suppression device a, a second vibration suppression device b, and a third vibration suppression device c, the second axis bb of the first vibration suppression device a extending along a line connecting the centers of the sub floating body where the first vibration suppression device a is located and the sub floating body where the third vibration suppression device c is located, the second axis bb of the second vibration suppression device b extending along a line connecting the centers of the sub floating body where the second vibration suppression device b is located and the sub floating body where the third vibration suppression device c is located, and the second axis bb of the third vibration suppression device c extending along the second direction Y; and
the controller is configured to:
in the case that a first-order spectral data corresponding to the first direction X rotation acceleration is less than or equal to m, control the rotating discs of the first vibration suppression device a and the second vibration suppression device b to be stationary, and control the rotating disc of the third vibration suppression device c to rotate within a first speed range;
in the case that the first-order spectral data corresponding to the first direction X rotation acceleration is greater than m and less than or equal to k, control the rotating discs of the first vibration suppression device a and the second vibration suppression device b to rotate within the first speed range, and control the rotating disc of the third vibration suppression device c to rotate within a second speed range, a minimum value of the second speed range being greater than a maximum value of the first speed range; and
in the case that the first-order spectral data corresponding to the first direction X rotation acceleration is greater than k and less than or equal to L, control the rotating discs of the first vibration suppression device a, the second vibration suppression device b, and the third vibration suppression device c to rotate within the second speed range.

6. The wind turbine foundation according to claim 5, wherein the controller is further configured to:
in the case that a first-order spectral data corresponding to the second direction Y rotation acceleration is less than or equal to m, control the rotating disc of the third vibration suppression device c to be stationary, and control the rotating discs of the first vibration suppression device a and the second vibration suppression device b to rotate within the first speed range; and
in the case that the first-order spectral data corresponding to the second direction Y rotation acceleration is greater than m and less than or equal to L, control the rotating disc of the third vibration suppression device c to be stationary, and control the rotating discs of the first vibration suppression device a and the second vibration suppression device b to rotate within the second speed range.

7. The wind turbine foundation according to claim 4, wherein the floating body vibration acceleration comprises a first direction X rotation acceleration around the first direction X and a second direction Y rotation acceleration around the second direction Y perpendicular to the first direction X;
three of the vibration suppression devices comprise a first vibration suppression device a, a second vibration suppression device b, and a third vibration suppression device c, the second axis bb of the first vibration suppression device a extending along the first direction X, the second axis bb of the second vibration suppression device b extending along the second direction Y, and the second axis bb of the third vibration suppression device c extending along a line connecting the centers of the sub floating body where the second vibration suppression device b is located and the sub floating body where the third vibration suppression device c is located; and
the controller is configured to:
in the case that a first-order spectral data corresponding to the first direction X rotation acceleration is less than or equal to m, control the rotating discs of the first vibration suppression device a and the third vibration suppression device c to be stationary, and control the rotating disc of the second vibration suppression device b to rotate within the first speed range;
in the case that the first-order spectral data corresponding to the first direction X rotation acceleration is greater than m and less than or equal to k, control the rotating disc of the first vibration suppression device a to be stationary, control the rotating disc of the third vibration suppression device c to rotate within the first speed range, and control the rotating disc of the second vibration suppression device b to rotate within the second speed range, a minimum value of the second speed range being greater than a maximum value of the first speed range; and
in the case that the first-order spectral data corresponding to the first direction X rotation acceleration is greater than k and less than or equal to L, control the rotating disc of the first vibration suppression device a to be stationary, and control the rotating discs of the third vibration suppression device c and the second vibration suppression device b to rotate within the second speed range.

8. The wind turbine foundation according to claim 7, wherein the controller is further configured to:
in the case that a first-order spectral data corresponding to the second direction Y rotation acceleration is less than or equal to m, control the rotating discs of the second vibration suppression device b and the third vibration suppression device c to be stationary, and control the rotating disc of the first vibration suppression device a to rotate within the first speed range;
in the case that the first-order spectral data corresponding to the second direction Y rotation acceleration is greater than m and less than or equal to k, control the rotating disc of the second vibration suppression device b to be stationary, control the rotating disc of the third vibration suppression device c to rotate within the first speed range, and control the rotating disc of the first vibration suppression device a to rotate within the second speed range; and
in the case that the first-order spectral data corresponding to the second direction Y rotation acceleration is greater than k and less than or equal to L, control the rotating disc of the second vibration suppression device b to be stationary, and control the rotating disc of the third vibration suppression device c and the rotating disc of the first vibration suppression device a to rotate within the second speed range.

9. The wind turbine foundation according to any one of claims 1 to 8, wherein the rotating disc is in a disc shape and made of a metal material, an output end of the driving component is connected with an output shaft, and the driving component is located outside the mounting frame and connected to the center of the rotating disc via the output shaft to drive the rotating disc to rotate;
and/or the mounting frame is provided with a hollow cavity in a vacuum state, the rotating disc being located inside the hollow cavity and connected to the driving component.

10. A wind generating set, comprising:
the wind turbine foundation according to any one of claims 1 to 9; and
a wind turbine body comprising a tower and a nacelle arranged on the tower, wherein the tower is connected to the main floating body of the wind turbine foundation.

11. The wind generating set according to claim 10, wherein the vibration suppression device is provided on at least one of the tower or the nacelle, the vibration suppression system further comprises a second collector configured to obtain a nacelle vibration acceleration of the nacelle, and the controller is further configured to control, based on the nacelle vibration acceleration, the driving component of each of the vibration suppression devices on the wind turbine body to drive the rotating disc to rotate to the predetermined rotational speed.

12. A method for controlling a wind generating set, comprising:
configuring the wind turbine according to claim 10 or 11;
obtaining a floating body vibration acceleration of the support assembly and a nacelle vibration acceleration of the nacelle separately; and
configuring a speed of each vibration suppression device based on the floating body vibration acceleration and the nacelle vibration acceleration.

13. The method according to claim 12, wherein before the step of configuring the speed of each vibration suppression device based on the floating body vibration acceleration and the nacelle vibration acceleration, the method further comprises:
determining, based on the floating body vibration acceleration and the nacelle vibration acceleration, a first-order spectral data of the nacelle in the first direction X and a first-order spectral data of the nacelle in the second direction Y, and also a first-order spectral data of the support assembly in the first direction X and a first-order spectral data of the support assembly in the second direction Y, respectively.

14. The method according to claim 13, wherein in the case that the first direction X is perpendicular to the second direction Y, three of the vibration suppression devices comprise a first vibration suppression device a, a second vibration suppression device b, and a third vibration suppression device c, the second axis bb of the first vibration suppression device a extending along a line connecting the centers of the sub floating body where the first vibration suppression device a is located and the sub floating body where the third vibration suppression device c is located, the second axis bb of the second vibration suppression device b extending along a line connecting the centers of the sub floating body where the second vibration suppression device b is located and the sub floating body where the third vibration suppression device c is located, and the second axis bb of the third vibration suppression device c extending along the second direction Y, the step of configuring the speed of each vibration suppression device based on the floating body vibration acceleration and the nacelle vibration acceleration comprises:
in the case that the first-order spectral data of the support assembly in the first direction X is less than or equal to m, controlling the rotating discs of the first vibration suppression device a and the second vibration suppression device b to be stationary, and controlling the rotating disc of the third vibration suppression device c to rotate within a first speed range;
in the case that the first-order spectral data of the support assembly in the first direction X is greater than m and less than or equal to k, controlling the rotating discs of the first vibration suppression device a and the second vibration suppression device b to rotate within the first speed range, and controlling the rotating disc of the third vibration suppression device c to rotate within a second speed range, wherein a minimum value of the second speed range is greater than a maximum value of the first speed range; and
in the case that the first-order spectral data of the support assembly in the first direction X is greater than k and less than or equal to L, controlling the rotating discs of the first vibration suppression device a, the second vibration suppression device b, and the third vibration suppression device c to rotate within the second speed range.

15. The method according to claim 14, wherein the step of configuring the speed of each vibration suppression device based on the floating body vibration acceleration and the nacelle vibration acceleration further comprises:
in the case that the first-order spectral data of the support assembly in the second direction Y is less than or equal to m, controlling the rotating disc of the third vibration suppression device c to be stationary, and controlling the rotating discs of the first vibration suppression device a and the second vibration suppression device b to rotate within the first speed range; and
in the case that the first-order spectral data of the support assembly in the second direction Y is greater than m and less than or equal to L, controlling the rotating disc of the third vibration suppression device c to be stationary, and controlling the rotating discs of the first vibration suppression device a and the second vibration suppression device b to rotate within the second speed range.

16. The method according to claim 13, wherein in the case that the first direction X is perpendicular to the second direction Y, three of the vibration suppression devices comprise a first vibration suppression device a, a second vibration suppression device b, and a third vibration suppression device c, the second axis bb of the first vibration suppression device a extending along the first direction X, the second axis bb of the second vibration suppression device b extending along the second direction Y, and the second axis bb of the third vibration suppression device c extending along a line connecting the centers of the sub floating body where the second vibration suppression device b is located and the sub floating body where the third vibration suppression device c is located, the step of configuring the speed of each vibration suppression device based on the floating body vibration acceleration and the nacelle vibration acceleration comprises:
in the case that the first-order spectral data of the support assembly in the first direction X is less than or equal to m, controlling the rotating discs of the first vibration suppression device a and the third vibration suppression device c to be stationary, and controlling the rotating disc of the second vibration suppression device b to rotate within the first speed range;
in the case that the first-order spectral data of the support assembly in the first direction X is greater than m and less than or equal to k, controlling the rotating disc of the first vibration suppression device a to be stationary, controlling the rotating disc of the third vibration suppression device c to rotate within the first speed range, and controlling the rotating disc of the second vibration suppression device b to rotate within the second speed range, a minimum value of the second speed range being greater than a maximum value of the first speed range; and
in the case that the first-order spectral data of the support assembly in the first direction X is greater than k and less than or equal to L, controlling the rotating disc of the first vibration suppression device a to be stationary, and controlling the rotating disc of the third vibration suppression device c and the rotating disc of the second vibration suppression device b to rotate within the second speed range.

17. The method according to claim 16, wherein the step of configuring the speed of each vibration suppression device based on the floating body vibration acceleration and the nacelle vibration acceleration further comprises:
in the case that the first-order spectral data of the support assembly in the second direction Y is less than or equal to m, controlling the rotating discs of the second vibration suppression device b and the third vibration suppression device c to be stationary, and controlling the rotating disc of the first vibration suppression device a to rotate within the first speed range;
in the case that the first-order spectral data of the support assembly in the second direction Y is greater than m and less than or equal to k, controlling the rotating disc of the second vibration suppression device b to be stationary, controlling the rotating disc of the third vibration suppression device c to rotate within the first speed range, and controlling the rotating disc of the first vibration suppression device a to rotate within the second speed range; and
in the case that the first-order spectral data of the support assembly in the second direction Y is greater than k and less than or equal to L, controlling the rotating disc of the second vibration suppression device b to be stationary, and controlling the rotating disc of the third vibration suppression device c and the rotating disc of the first vibration suppression device a to rotate within the second speed range.

18. The method according to claim 13, wherein the step of configuring the speed of each vibration suppression device based on the floating body vibration acceleration and the nacelle vibration acceleration further comprises:
in the case that the first-order spectral data of the nacelle in the first direction X and the first-order spectral data of the nacelle in the second direction Y are both less than or equal to a value of w, controlling the driving component of each of the vibration suppression devices on the wind turbine body to stop, so that the speed of each of the rotating discs relative to the mounting frame is 0;
in the case that at least one of the values of the first-order spectral data of the nacelle in the first direction X and the first-order spectral data of the nacelle in the second direction Y is greater than w and less than or equal to p, controlling the driving component of at least one of the vibration suppression devices on the wind turbine body to drive the rotating disc to rotate at a third speed; and
in the case that at least one of the values of the first-order spectral data of the nacelle in the first direction X and the first-order spectral data of the nacelle in the second direction Y is greater than p, controlling the driving component of at least one of the vibration suppression devices on the wind turbine body to drive the rotating disc to rotate at a fourth speed, wherein the fourth speed is greater than the third speed.
